Europäisches Patentamt

European Patent Office

Office européen des brevets

(11) Publication number: **0 312 602**
A1

## EUROPEAN PATENT APPLICATION

published in accordance with Art. 158(3) EPC

(21) Application number: 88903381.7

(22) Date of filing: 15.04.88

Data of the international appli-
cation taken as a basis:

(86) International application number:
PCT/JP 88/00382

(87) International publication number:
WO 88/07917 (20.10.88 88/23)

(51) Int. Cl.⁴: **B 25 J 9/16,** B 25 J 13/08,
G 05 D 3/12

(30) Priority: 17.04.87 JP 93371/87

(43) Date of publication of application: 26.04.89
Bulletin 89/17

(84) Designated Contracting States: DE FR GB IT

(71) Applicant: KABUSHIKI KAISHA KOMATSU
SEISAKUSHO, 3-6, Akasaka 2-chome, Minato-ku
Tokyo 107 (JP)

(72) Inventor: YAMAMOTO, Yuichi, 920, Itado Isehara-shi,
Kanagawa-ken 259-11 (JP)
Inventor: HIRANO, Noboru, 18, Manda Hiratsuka-shi,
Kanagawa-ken 254 (JP)
Inventor: SHIRAE, Takashi, 306-6, Kouchi Hiratsuka-shi,
Kanagawa-ken 254 (JP)

(74) Representative: Schmitz, Waldemar, Dipl.-Phys.,
Lessingstrasse 10, D-6200 Wiesbaden (DE)

(54) **APPARATUS FOR CONTROLLING FLEXIBLE-ARM ROBOT.**

(57) A control apparatus for guiding a tip of a flexible-arm robot
to a required target point through a shortest path. This appara-
tus is designed to control a first actuator to give bending motion
to flexible arms (2, 4, 6) comprising many discs (9) serially stak-
ked in mutual contact, each of said discs having an outwardly
bent surface. The control apparatus comprises an operator pa-
nel unit (11); a main operation unit (15) which performs various
operations upon receipt of operation signals from the panel unit
(11) to produce operation instruction signals ($J_1$ to $J_7$) for each
of the degrees of freedom of flexible arms (2, 4, 6); a servo
control unit (18) for producing respective control signals ($I_1$ to
$I_{11}$) for a plurality of hydraulic actuators ($21_1$ to $21_{11}$) for opera-
ting said first actuator in response to operation instruction si-
gnals from said main operation unit (15); operational force de-
tector means ($22_1$ to $22_8$) for detecting the operational force of
said first actuator; position detector means ($23_1$ to $23_{11}$) for de-
tecting the motion of said first actuator; and a feedback means
for inputting the present position of said first actuator to an
arithmetic unit of said servo control unit in response to signals
detected by the above two detect means.

SPECIFICATION

CONTROL SYSTEM FOR FLEXIBLE ARM ROBOT

TECHNICAL FIELD OF THE INVENTION

This invention relates to a control system for a flexible arm robot wherein the flexible arm comprising a plurality of circular disks arranged upon one another in series so as to contact each other and each having an outwardly convex or curved contact surface is allowed to cause motions by actuating the disks by means of a plurality of implements such as wires, etc. in such a manner that the contact points between the pairs of disks move in rolling contact.

BACKGROUND TECHNIQUES OF THE INVENTION

A prior art flexible arm robot is shown, for example, in Japanese Laid-Open Patent Application No. SHO-59-21755. This prior art flexible arm robot is arranged such that a plurality of drums each being coiled with independent wire serving as an implement are controlled by means of their respective servo motors.

The characteristic feature of the flexible arm robot resides in that a necessary equipment can be moved freely over the obstacles to a target position. To achieve this concretely, until a necessary equipment such as a spray gun, etc. is set at a target position, it is required to effect accurate controls along required routes (paths), such as controls of measureme   of positions and flu'ᴴ

pressure controls, etc.. However, the above-mentioned prior art flexible arm robot is incapable of effecting accurate controls required.

### SUMMARY OF THE INVENTION

The present invention has been made in view of the above-mentioned circumstances, and has for its object to provide a control system for a flexible arm robot wherein when the leading end of the flexible arm robot is controlled accurately so that it may be guided to a target point by way of a required and shortest route, enhanced positional accuracy and repeated accuracy can be obtained.

To achieve the above-mentioned object, according to an aspect of the present invention, there is provided a control system for a flexible arm robot wherein a flexible arm comprising a plurality of circular disks arranged upon one another in series so as to contact with each other and each having a convex or curved contact surface is allowed to move in a plurality of different planes (or with a plurality of degrees of freedom) by actuating the disks by means of a plurality of implements in such a manner that the contact points between the pair of disks move in rolling contact, characterized in that it comprises an operational unit having a console panel and a teaching box; a main arithmetic unit adapted to receive operational signals from the operational unit to effect various kinds of computations including coordinate exchange and interpolational computation to thereby output operational command signals for each of the degrees of freedom of the flexible arm; a servo control unit adapted to output control signals to a plurality of hydraulic actuators for actuating the implements based on the operatoinal command signals received from the main arithmetic unit; manipulating force detector means for detecting the manipulating forces developed by the implements; positional detector means for detecting the movements of said implements; and feed back means adapted to input the present positions of the implements to the arithmetic unit of the servo control unit according to the detection signals received from both the detector means.

Further, according to the present invention, the above-mentioned control system for the flexible arm robot has seven degrees of freedom in total, i.e., two degrees of freedom for a lower flexible arm, two degrees of freedom for an upper flexible arm, and three degrees of freedom for a wrist.

Further, according to the present invention, in the above-mentioned control system for the flexible arm robot, the above-mentioned implement comprises at least two lengths of wires per one length of the flexible arm, and these wires pass through the marginal portions of the disks, one end of each of them being engaged with the top or most front disk of the flexible arm, and the other end thereof being coupled with a hydraulic actuator.

Further, according to the present invention, the above-mentioned control system for the flexible arm robot, the above-mentioned positional detector means comprises positional detectors which are equal in number to the implements, and these positional detectors are connected, respectively, to the rear ends of the measuring wires, the leading end of each of the measuring wires passing through the marginal portions of each of the disks and being engaged with the top or most front disk of the above-mentioned disk.

The above-mentioned and other advantages, aspects and objects will become apparent to those skilled in the art from the following detailed description of preferred embodiments according to the present inventions, which are illustrated in the accompanying drawings.

BRIEF DESCRIPTION OF THE DRAWINGS

Fig. 1 is a front view of a flexible arm robot in which a control system of the present invention is built;

Fig. 2 is an explanatory view of hte schematic configuration of one length of flexible arm;

Fig. 3 is an explanatory view of the flexible arm shown in Fig. 2;

Fig. 4 is a diagram showing the overall configuration of the control system of the present invention;

Fig. 5 is a layout of the components of a lower flexible arm in one embodiment of the present invention;

Fig. 6 is an explanatory view showing inclination angles with two degrees of freedom for the lower flexible arm;

Fig. 7 is an explanatory view showing the relationship the inclination angle of the arm and the tension in one embodiment of the present invention;

Fig. 8 is a block diagram showing a part of servo control unit in the control system of the present invention;

Fig. 9 is a block diagram showing the system of components in one embodiment of the present invention;

Fig. 10 is a flow chart showing the operation of the control system of the present invention;

Fig. 11 is an explanatory view showing the relationship between the inclination angle of the arm and the tension in another embodiment of the present invention;

Fig. 12 is a layout of the components of the lower flexible arm in another embodiment of the present invention; and

Fig. 13 is an explanatory view of the operation of another embodiment of the present invention.

DETAILED DESCRIPTION OF THE PREFERRED EMBODIMENTS

The present invention will now be described below by way of embodiments thereof as shown in the accompanying drawings.

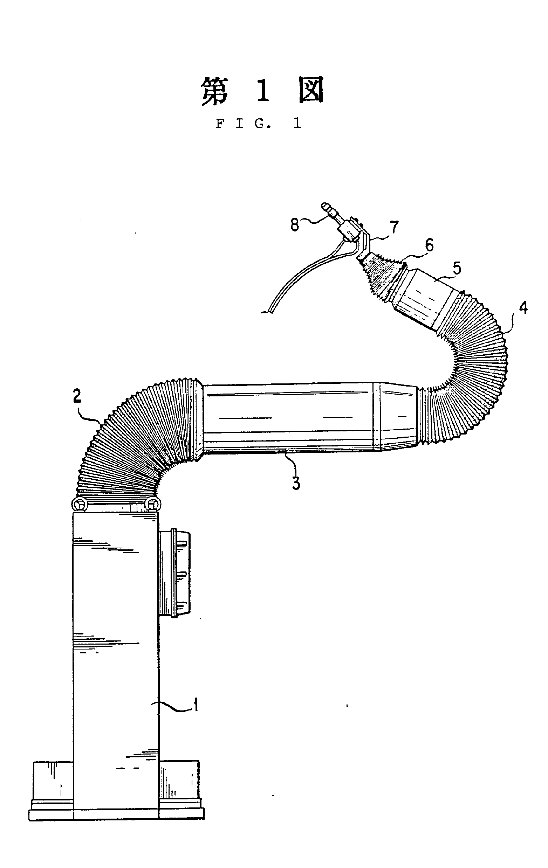

Fig. 1 shows a flexible arm robot. In this drawing, referance numeral denotes an upstanding base, 2 a lower flexible arm, 3 an arm joint, 4 an upper flexible arm, 5 a wrist joint, 6 a wrist, 7 a bracket, and 8 a spray gun. The above-mentioned lower flexible arm 2, the upper flexible arm 4 and the wrist 6 are of a flexible arm construction, respectively.

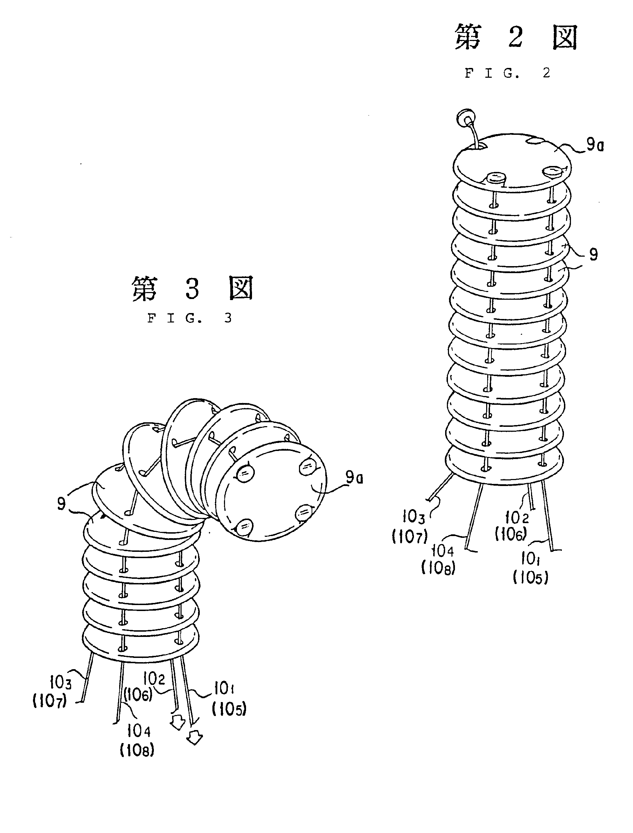

In the first place, according to a first embodiment of the present invention, the above-mentioned lower and upper flexible arms 2 and 4 are constructed as shown in Figs. 2 and 3 and comprise a plurality of circular disks 9 arranged upon one another in series and each having a convex or curved contact surface. The disks 9 have wires $10_1$, $10_2$, $10_3$ and $10_4$ passing through four holes formed close to the outer peripheral edge thereof and at circumferentially equal intervals. The leading ends of the wires $10_1$, $10_2$, $10_3$ and $10_4$ are arranged to be engaged with the top disk 9a.

The arrangement is made such that when at least one of the above-mentioned wires $10_1$, $10_2$, $10_3$ and $10_4$ is pulled the flexible arm robot is bent in the pulling direction as shown in Fig. 3.

Each of the above-mentioned wires $10_1$, $10_2$, $10_3$ and $10_4$ is adapted to be actuated independently by means of its respective hydraulic actuator not shown. In case of the lower flexible arm 2, the hydraulic actuators for the wires are accommodated in the upstanding base 1, whilst in case of the upper flexible arm 4, the hydraulic actuators for the wires are accommodated in the arm joint 3. Further, the trailing end of the arm joint 3 is coupled with the disk 9a located at the leading end of the lower flexible arm 2.

The above-mentioned wrist 6 is adapted to be actuated in the three direction; that is; in a direction at right angles to the axis thereof and in two rotational directions, and the drive of the wrist 6 in the three directions is made by means of independent hydraulic actuators, respectively. These hydraulic actuators are accommodated in the wrist joint 5. The wrist joint 5 is coupled with the disk 9a located at the leading end of the disks 9 constituting the upper flexible arm 4.

As mentioned above, the lower flexible arm 2 is controlled by means of four hydraulic actuators and four lengths of wires $10_1$, $10_2$, $10_3$ and $10_4$ connected thereto, whilst the upper flexible arm 4 is controlled by means of four hydraulic actuators and four lengths of wires $10_5$, $10_6$, $10_7$ and $10_8$ connected thereto, and the wrist 6 is controlled by means of three hydraulic actuators. Therefore, the flexible arm robot in the above-mentioned first embodiment is arranged to be controlled by means of eleven hydraulic actuators.

To meet the convenience of explanation of these hydraulic actuators, those for the lower flexible arm 2 will be referred to as first, second, third and fourth hydraulic actuators; those for the upper flexible arm 4 will be referred to as fifth, sixth, seventh and eighth hydraulic actuators, and those for the wrist 6 will be referred to as nineth, tenth and eleventh hydraulic actuators.

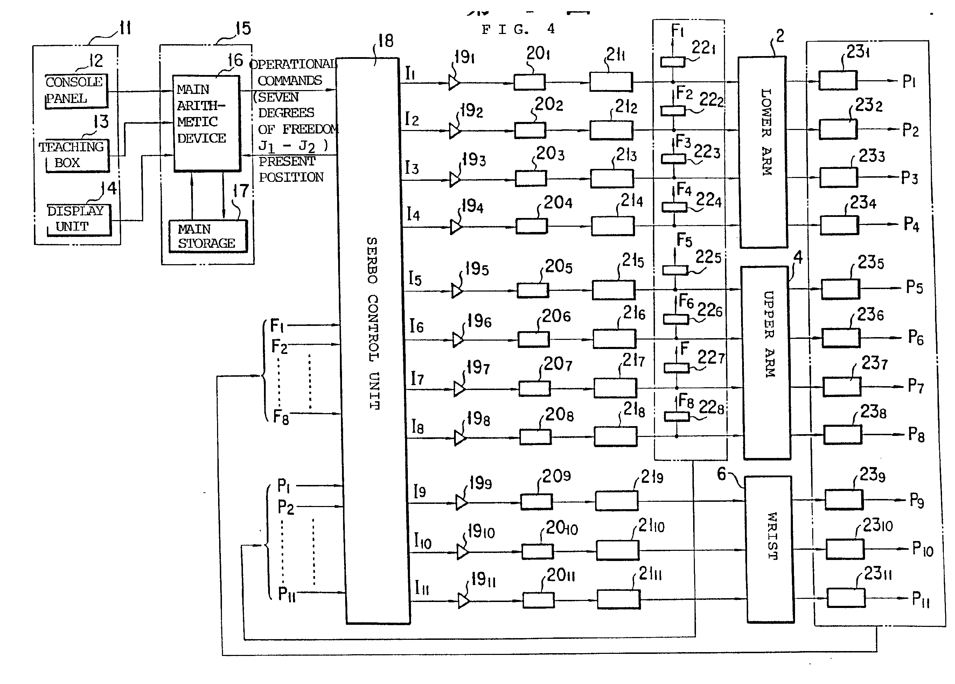

Fig. 4 is a block diagram showing controls of the flexible arm robot by actuating each of the above-mentioned first to eleventh hydraulic actuators. The control operation of the above-mentioned flexible arm robot will be described below with reference to this block diagram.

In Fig. 4, reference numeral 11 denotes an operational unit comprising a console panel 12, a teaching box 13 and a display unit 14, and 15 a main arithmetic unit comprising a main arithmetic device 16 and a main storage 17. Reference numeral 18 indicates a servo control unit $19_1$ to $19_{11}$ digital/analog converters, $20_1$ to $20_{11}$ servo valves, $21_1$ to $21_{11}$ first to eleventh hydraulic actuators, $22_1$ to $22_{11}$ tension sensors serving as manipulating force detector means, and $23_1$ to $23_{11}$ positional detectors.

In Fig. 4, when the main arithmetic device 16 of the main arithmetic unit 15 receives as inputs the operational signals from the console panel 12 and the teaching box 13, and also robot program and signals indicative of positional data from the main storage 17, it will execute repeatedly coordinate exchange, interpolational computation, singular-value processing, compilation of robot program and other operations. Subsequently, the main arithmetic unit 15 will transmit an operational command signal, as an output, to the servo control unit 18. This operational command signal includes those with seven degrees of freedom, in total, i.e., two degrees of freedom for the lower flexible arm 2, two degrees of freedom for the upper flexible arm 4, and three degrees of freedom for the wrist 6.

When the servo control unit receives each of the above-mentioned operational command signals with seven degrees of freedom, it will output any of control signals $I_1$ to $I_{11}$ for each degree of freedom. For the two degrees of freedom for the lower flexible arm 2, for example, the servo control unit 18 will transmit, as outputs, control signals $I_1$, $I_2$, $I_3$ and $I_4$ through the digital analog converters $19_1$, $19_2$, $19_3$ and $19_4$ to the servo valves $20_1$, $20_2$, $20_3$ and $20_4$ associated, respectively, with the first, second, third and fourth hydraulic actuators $21_1$, $21_2$, $21_3$ and $21_4$ for actuating four lengths of wires adapted to control the lower flexible arm 2.

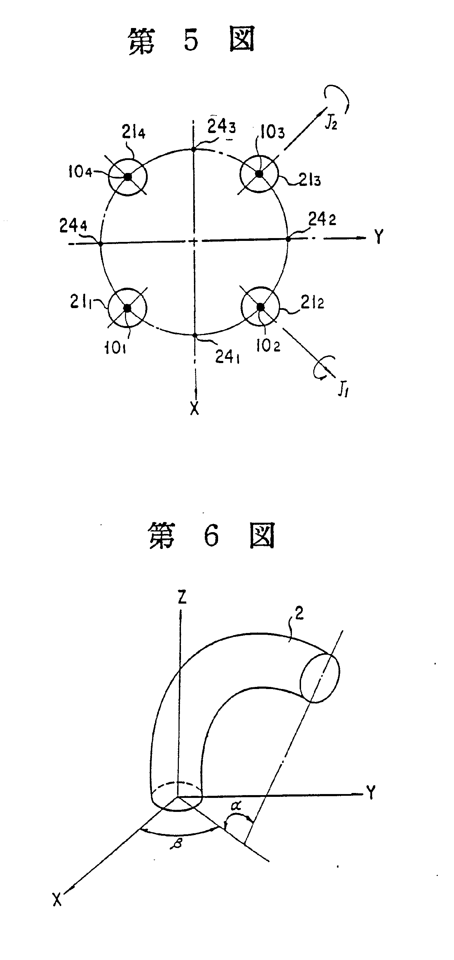

Stating in concrete manner, in case of a first degree of freedom of operational command to the lower flexible arm 2, for example, control signals $I_1$ and $I_3$ will be transmitted for the first and third hydraulic actuators $21_1$ and $21_3$ located on a diagonal out of the four hydraulic actuators $21_1$, $21_2$, $21_3$ and $21_4$ shown in Fig. 5. The control signals $I_1$ and $I_3$ will actuate the first and third servo valves $20_1$ and $20_3$ and the first and third hydraulic actuators $21_1$ and $21_3$ so as to operate the two lengths of wires $10_1$ and $10_3$ of the lower flexible arm, which are located on a diagonal line. At that time, the tensions applied to both the wires $10_1$ and $10_3$ are detected by means of the tension sensors $22_1$ and $22_3$ provided on the wires $10_1$ and $10_3$, respectively, and detected values $F_1$ and $F_3$ are fed back to the servo control unit 18. The operation of the above-mentioned wires $10_1$ and $10_3$ will cause the lower flexible arm 2 to be b⸺ with

the first degree the actuating positions of the hydraulic actuators $21_1$ and $21_3$ when the lower flexible arm 2 is actuated by the above-mentioned operation are detected by the positional detectors $23_1$ and $23_3$, and detected values $P_1$ and $P_3$ are fed back to the servo control unit 18.

The above-mentioned positional detectors $23_1$, $23_2$, $23_3$ and $23_4$ are connected with measuring wires (piano wires) $24_1$, $24_2$, $24_3$ and $24_4$ which pass through the marginal portions of the disks in the like manner as the wires $10_1$ to $10_4$ at four equally spaced apart positions between the adjoining ones of the wires $10_1$, $10_2$, $10_3$ and $10_4$ located along a circumference as shown in Fig. 5 and which are coupled with the top or leading disk so as to detect the tensions applied to these measuring wires $24_1$, $24_2$, $24_3$ and $24_4$.

The servo control unit 18 will compare the above-mentioned detected values $F_1$ to $F_8$ and $P_1$ to $P_{11}$ (present values) with command values and transmit further new control output signals $I_1$ to $I_{11}$.

The above-mentioned operation is made simultaneously or sequentially for the second degree of freedom of the lower flexible arm 2, and for each of the two degrees of freedom of the upper flexible arm 4 and each of the three degrees of freedom of the wrist 6 to compare the present position of the flexible arm robot with the target position thereof and is repeated until the leading end of the wrist 6 is set at the target position.

The relative position between the hydraulic actuators $21_1$ to $21_4$ for actuating the wires $10_1$ to $10_4$ and the measuring wires $24_1$ to $24_4$ when the above-mentioned lower flexible arm 2 is rendered operative for the two degrees of freedom will be described in detail below with reference to Figs. 6 and 7.

Stating the example of the lower flexible arm 2, the main arithmetic unit 15 and the servo control unit 18 will execute controls peculiar to the flexible arm for computing the hydraulic pressures to be applied to the hydraulic actuators on the basis of the relationship between the four hydraulic actuators $21_1$ to $21_4$ for actuating the four lengths of wires $10_1$ to $10_4$ for the lower flexible arm 2 and the measuring wires $24_1$ to $24_4$ located out of phase from the wires $10_1$ to $10_4$ by 45 degrees, and the complicated geometrical relationship between the two degrees of freedom ($\alpha_1$, $\beta_1$) of the lower flexible arm 2, the inclination angles ($J_1$, $J_2$) controlling the two degrees of freedom, and the tensions $F_1$ to $F_4$ applied to the wires $10_1$ to $10_4$, respectively. The tensions $F_1$ to $F_4$ applied to the wires $10_1$ to $10_4$, respectively, shall include a reference tension F ref. This reference tension has a value required to give the flexible arm a sufficient rigidity.

The two degrees of freedom ($\alpha_1$, $\beta_1$) of the lower flexible arm are values defined, respectively, as shown in Fig. 6, and the angles ($J_1$, $J_2$) obtained by coordinate

conversion of the values ($\alpha_1$, $\beta_1$) on the flexible arm drive axis as shown in Fig. 5 are utilized. The same is applicable to the upper flexible arm. Further, in Fig. 6, reference character "$\alpha$" denotes an inclination angle of the lower flexible arm 2 relative to the plane X-Y, and "$\beta$" a turning angle thereof about Z axis from X axis. In case the degree of freedom ($\alpha_1$, $\beta_1$) are converted into the degrees of freedom ($J_1$, $J_2$), if the (first) degree of freedom for angle $J_1$ is defined by the first and third hydraulic actuators $21_1$ and $21_3$, then the (second) degree of freedom for angle $J_2$ is defined by the second and fourth hydraulic actuators $21_2$ and $21_4$.

An angle (actual inclination angle) $J_1'$ which results from the difference in stroke between the first and third hydraulic actuators $21_1$ and $21_3$ is obtained by computing the stroke of the first hydraulic actuator 21, from the change in tension between the measuring wires $24_1$ and $24_2$, and then computing the difference in stroke between the first and third hydraulic actuators $21_1$ and $21_3$, because the stroke of the third hydraulic actuator $21_3$ located on the diagonal line opposite to the first hydraulic actuator $21_1$ has the same absolute value of the change with the reverse sign.

Since there is a relationship as shown in Fig. 7 between the tensions applied to the wires, inclination angles and the reference tension F ref; that is; there is a relationship $J_1 \propto f(F_1 - F_3)$, the tensions $F_1$ and $F_3$

applied to the wires $10_1$ and $10_3$ against the inclination angles $(\alpha_1,\ \beta_1) \to (J_1,\ J_2)$ are set based on the reference tension F ref and converted into fluid pressures.

In the first and third hydraulic actuators $21_1$ and $21_3$ which are actuated by the fluid pressure converted from the tensions, the tensions $F_1$, $F_3$ applied to the wires $10_1$, $10_3$ and the strokes $S_1$ and $S_3$ thereof are measured by means of the measuring wires $24_1$ and $24_4$ provided in the periphery of the first hydraulic actuator $21_1$ (or by means of the measuring wires $24_3$, $24_2$ provided in the periphery of the third hydraulic actuator $21_3$ or alternatively wires $24_1$, $24_2$ or wires $24_3$ and $24_4$ may be used from the relationship of extension nad contraction), and the actual inclination angle $J_1'$ is computed based on the above-mentioned concept to make comparison between the angle $J_1$ for setting the first degree of angle and $J_1'$ (actually measured value) to thereby control the flexible arm.

Subsequently, in the same manner, the degree of freedom of the angle $J_2$ and each of the degrees of freedom of the upper flexible arm 4 are set as predetermined and further the wrist 6 is rotated so that the leading end of the flexible arm can be located at an intended position.

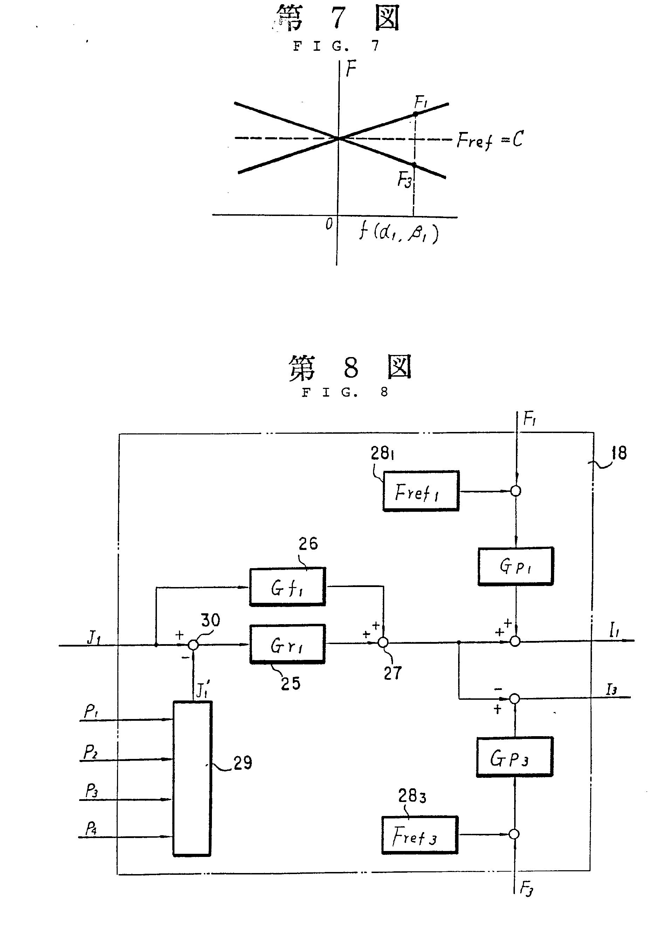

The operation of the flexible arm is made based on the above-mentioned concept, and a block diagram for the servo control unit which is in controlling operation is shown in Fig. 8. This drawing shows an example of an analog

- 14 -

00312602

servo wherein the lower flexible arm 2 is subjected to an operational command for the first degree of freedom, but the same is applicable to the cases of the second degree of freedom of the lower flexible arm 2 and each of the degrees of freedom of the upper flexible arm 4.

In Fig. 8, when an operational command $J_1$ for the first degree of freedom is input to the servo control unit 18, a computation is made by means of a tension compensator 25 adapted to compensate the tension for angular deviation and an angle-tension converter 26 and its result is added by an adder 27 and output as a tension. Whilst there are provided a first and a third tension reference setting means $28_1$ and $28_3$ in the servo control unit 18. The values preset in the first and third tension reference setting means $28_1$ and $28_3$ are compared with the tensions $F_1$ and $F_3$ sent from the tension sensors $28_1$ and $28_3$, and addition and subtraction of the compared values to and from a signal of tension from the adder 27 are made so as to output first and third control signals $I_1$ and $I_3$. Further, in the above-mentioned control, before the operational command is input to the tension compensator 25 adapted to compensate the tension for angular deviation, the detection signals $P_1$, $P_2$, $P_3$ and $P_4$ which are fed back from the positional detectors $23_1$, $23_2$, $23_3$ and $23_4$ are computed by an arithmetic formula 29, and its result is input to a comparator 30 as a present value $J_1'$.

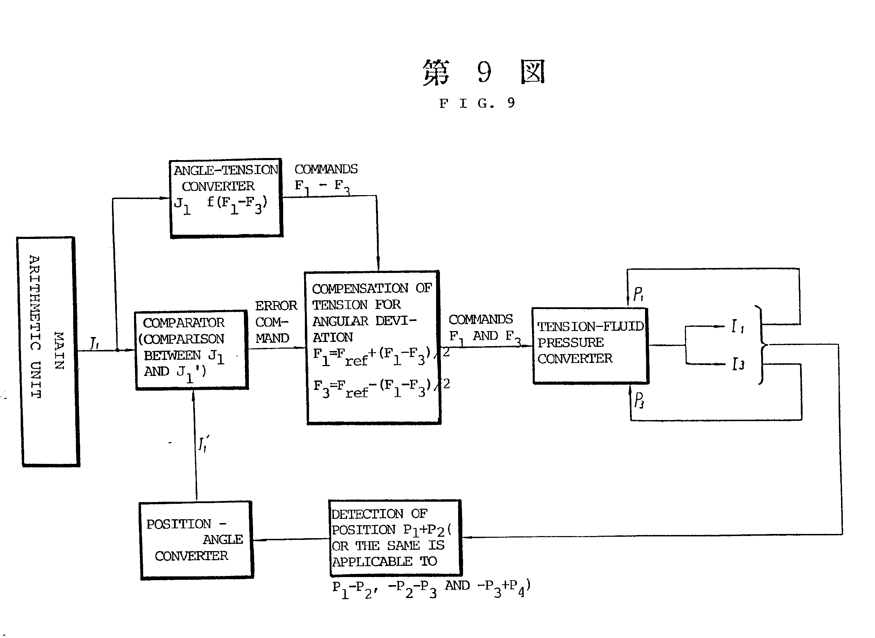

The block diagram shown in Fig. 8 is illustrated in Fig. 9 as a concrete component system. While both Fig. 8 and 9 show only one degree of freedom of the control system of the lower flexible arm 2, the same is applicable to other control systems.

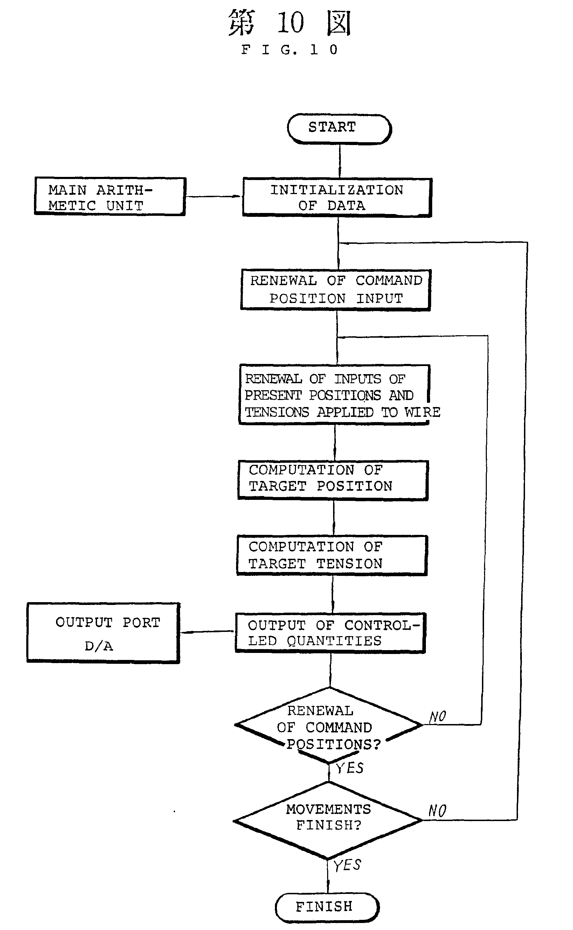

Further, the digital control of the above-mentioned control system is shown in Fig. 10.

Besides the embodiment described in detail hereinabove, the following embodiment may be applicable.

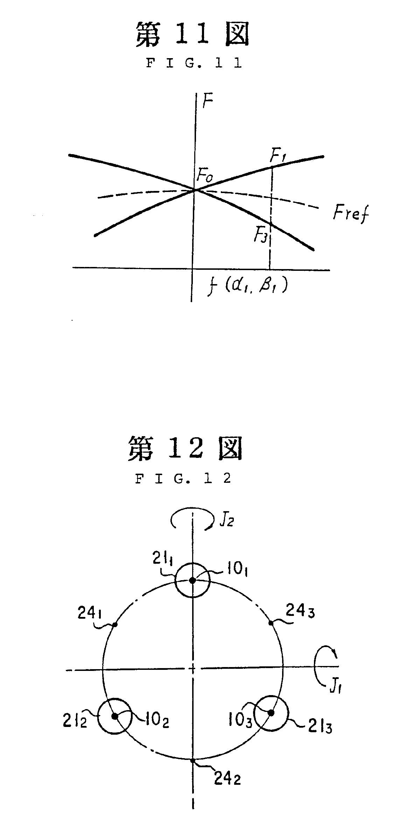

Stating in brief, although Fig. 10 shows an embodiment wherein the reference tension P ref is kept constant, F ref can be made variable based on a relationship F ref (0) > F ref ($\alpha_1$, $\beta_1$) as shown in Fig. 11. By so doing, the tensions $F_1$ and $F_3$ at f ($\alpha_1$, $\beta_1$) can be made less than the tensions $F_1$ and $F_3$ in the case of the embodiment shown in Fig. 7 so that the accuracy and durability can be enhanced.

Further, the wires $10_1$ to $10_8$ serving as implements for controlling the flexible arm are not limited to the four lengths of wires $10_1$ to $10_4$ for the lower flexible arm and the four lengths of wires $10_5$ to $10_8$, and it is only necessary to provide at least two lengths of such wires for each of the lower and upper flexible arms, and in that case other two lengths of wires serve as spares.

Stating in brief, as shown in Fig. 12, hydraulic actuators $21_1$, $21_2$ and $21_3$ are provided at three circumferentially equally spaced apart positions to operate the wires $10_1$, $10_2$ and $10_3$, and three lengths of measuring

wires $24_1$, $24_2$ and $24_3$ are provided respectively, between the adjoining ones of the hydraulic actuators $21_1$, $21_2$ and $21_3$.

In this embodiment, a second measuring wire $24_2$ is located at a position which is diagonally opposite to the first hydraulic actuator $21_1$. If the amount of movement of the second measuring wire $24_2$ is known, then the amount of the first hydraulic actuator $21_1$ located diagonally opposite to the measuring wire $24_2$ can be seen as being the same absolute value with reverse sign, and in this case too, control can be made.

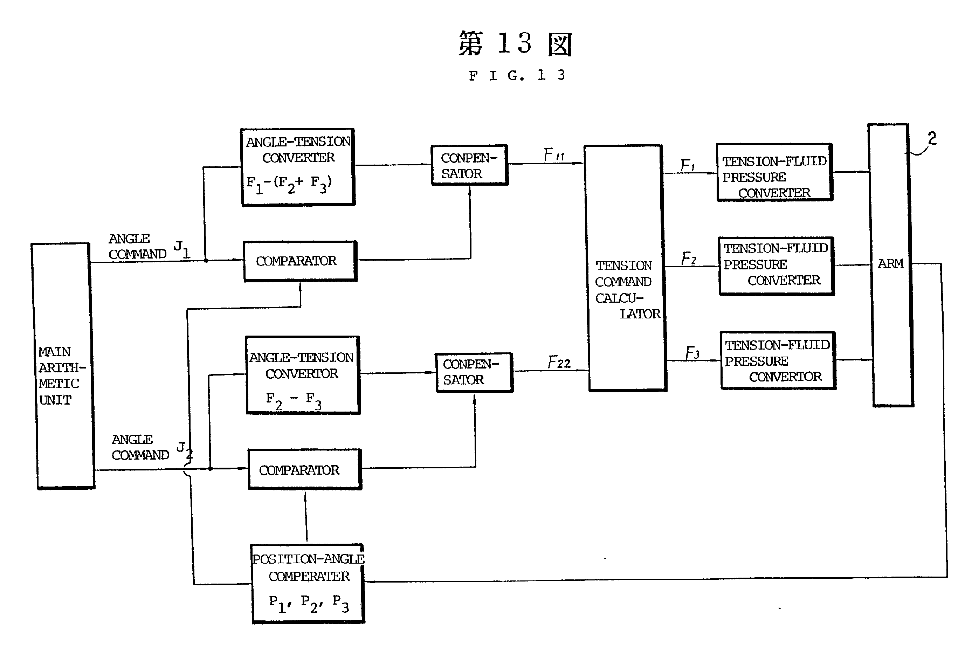

Further, in case there lengths of wires $10_1$ to $10_3$ are used, as for the angular command ($J_1$, $J_2$) transmitted by the main arithmetic unit, the configuration of the control system, for example, as shown in Fig. 13 can be considered.

Stating in brief, the computation of tension command Fn from tension command values $F_{11}$, $F_{22}$ computed from the two inclination angle command values ($J_1$, $J_2$) to each of the hydraulic actuators $21_1$, $21_2$, $21_3$ is made by using the following equations.

$$F_1 = \text{Fref} + F_{11}$$

$$F_2 = \frac{1}{2} (\text{Fref} - F_{11}) + F_{22}$$

$$F_3 = \frac{1}{2} (\text{Fref} - F_{11}) - F_{22}$$

Further, thepositional detector means may be mounted at the same positions as the wires $10_1$ to $10_4$ ($10_1$ to $10_3$) or $10_5$ to $10_8$ ($10_4$ to $10_6$). Further, the positional

detector means may be mounted at any desired positions. The number of the positional detector means is equal to that of the wires serving as implements, and control can be made by means of two positional detector means at a minimum. However, in case two positional detector means are provided, they are located at angular interval which is not 180 degrees.

As described in detail hereinabove, according to the control system of the flexible arm robot according to the present invention, the arrangement is made such that the fluid pressure to be applied to each of the hydraulic actuator is computed precisely from the relationship between each of the hydraulic actuators for actuating each of the implements and measuring wires used in the positional detector means for detecting the movement of each implement, and from the complicated relationship between a plurality of degrees of freedom of each of the flexible arms, the inclination angles of respective arms for controlling the degrees of freedom and the tensions applied to the wires serving as implements, and is applied properly, and therefore the leading end of the flexible robot arm can be guided to a target point by way of a required and shortest route.

- 18 -

00312602

<u>SCOPE OF CLAIM</u>

A control system for a flexible arm robot wherein a flexible arm comprising a plurality of circular disk arranged upon one another in series so as to contact with each other and each having a convex or curved contact surface is allowed to more in a plurality of different planes (or with a plurality of degrees of freedom) by actuating the disks by means of a plurality of implements in such a manner that the contact points between the pair of disks move in rolling contact, characterized in that it comprises an operational unit having a console panel and a teaching box; a main arithmetic unit adapted to receive operational signals from the operational unit to effect various kinds of computations including coordinate exchange and interpolational computation so as to output operational command signals for each of the degrees of freedom of said flexible arm; a servo control unit adapted to output control signals to a plurality of hydraulic actuators for actuating said implements based on the operational command signals received from the main arithmetic unit; manipulating forces detector means for detecting the manipulating forces developed by said implements; positional detector means for detecting the movements of said implements; and feed back means adapted to input the present positions of said implements to the arithmetic unit of said servo control unit according to the detection signals received from both said detector means.

2.　A control system for a flexible arm robot as claimed in claim 1, characterized in that the system has seven degrees of freedom in total, i.e., two degrees of freedom for a lower flexible arm, two degrees of freedom for a upper flexible arm, and three degrees of freedom for a wrist.

3.　A control system for a flexible arm robot as claimed in claim 1, characterized in that said implement comprises at least two lengths of wires per one length of the flexible arm, and these wires pass through the marginal portions of said disks, one end of each of them being engaged with the top or most front disk of said flexible arm, and the other end thereof being coupled with a hydraulic actuator.

4.　A control system for a flexible arm robot as claimed in claim 1, characterized in that said positional detector means comprises positional detectors which are equal in number to said implements, and these positional detectors are connected, respectively, with the rear ends of the measuring wires, the leading end of each of the measuring wires passing through the marginal portions of said disks and being engaged with the top or most front disk of said flexible arm.

00312602

# 第 1 図
### F I G. 1

00312602

第 2 図

FIG. 2

第 3 図

FIG. 3

F I G. 4

00312602

# 第 5 図

# 第 6 図

00312602

# 第 7 図
## FIG. 7

# 第 8 図
## FIG. 8

第 9 図

F I G. 9

ANGLE-TENSION
CONVERTER
$J_1 \quad f(F_1-F_3)$

COMMANDS
$F_1 - F_3$

MAIN
ARITHMETIC UNIT

$J_1$

COMPARATOR
(COMPARISON
BETWEEN $J_1$
AND $J_1{}'$)

ERROR
COM-
MAND

COMPENSATION OF
TENSION FOR
ANGULAR DEVI-
ATION
$F_1 = F_{ref} + (F_1 - F_3)/2$
$F_3 = F_{ref} - (F_1 - F_3)/2$

COMMANDS
$F_1$ AND $F_3$

TENSION-FLUID
PRESSURE
CONVERTER

$P_1$

$I_1$

$I_3$

$P_3$

$J_1{}'$

POSITION -
ANGLE
CONVERTER

DETECTION OF
POSITION $P_1 + P_2$(
OR THE SAME IS
APPLICABLE TO
$P_1 - P_2, \quad -P_2 - P_3$ AND $-P_3 + P_4$)

6/9

0312602

00312602

第 10 図
FIG.10

```
                              ┌─────────┐
                              │  START  │
                              └────┬────┘
                                   │
┌──────────────┐          ┌────────┴────────┐
│ MAIN ARITH-  │─────────▶│ INITIALIZATION  │
│ METIC UNIT   │          │    OF DATA      │
└──────────────┘          └────────┬────────┘
                                   │
                          ┌────────┴────────┐
                          │ RENEWAL OF COMMAND │
                          │ POSITION INPUT   │
                          └────────┬────────┘
                                   │
                       ┌───────────┴────────────┐
                       │ RENEWAL OF INPUTS OF   │
                       │ PRESENT POSITIONS AND  │
                       │ TENSIONS APPLIED TO WIRE│
                       └───────────┬────────────┘
                                   │
                          ┌────────┴────────┐
                          │ COMPUTATION OF  │
                          │ TARGET POSITION │
                          └────────┬────────┘
                                   │
                          ┌────────┴────────┐
                          │ COMPUTATION OF  │
                          │ TARGET TENSION  │
                          └────────┬────────┘
                                   │
┌──────────────┐          ┌────────┴────────┐
│ OUTPUT PORT  │─────────▶│ OUTPUT OF CONTROL-│
│    D/A       │          │ LED QUANTITIES  │
└──────────────┘          └────────┬────────┘
                                   │
                              RENEWAL
                            OF COMMAND ─── NO
                            POSITIONS?
                                 │YES
                            MOVEMENTS ─── NO
                             FINISH?
                                 │YES
                              ┌──────┐
                              │FINISH│
                              └──────┘
```

00312602

## 第 11 図
### F I G. 1 1

## 第 12 図
### F I G. 1 2

## 第 13 図

FIG. 13

# INTERNATIONAL SEARCH REPORT 00312602

International Application No  PCT/JP88/00382

## I. CLASSIFICATION OF SUBJECT MATTER (if several classification symbols apply, indicate all) 6

According to International Patent Classification (IPC) or to both National Classification and IPC

Int. Cl$^4$    B25J9/16, 13/08, G05D3/12

## II. FIELDS SEARCHED

### Minimum Documentation Searched 7

| Classification System | Classification Symbols |
|---|---|
| IPC | B25J9/16, 13/08, G05D3/12 |

Documentation Searched other than Minimum Documentation
to the Extent that such Documents are Included in the Fields Searched 8

| | |
|---|---|
| Jitsuyo Shinan Koho | 1926 - 1988 |
| Kokai Jitsuyo Shinan Koho | 1971 - 1988 |

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| Y | JP, B2, 59-21756 (Robotgruppen H.B.) 22 May, 1984 (22.05.84) | 1-4 |
| Y | JP, A, 59-19685 (Yushin Kaihatsu Yugen Kaisha) 1 February, 1984 (01.02.84) Page 2, upper right column, line 19 to lower left column, line 5, page 4, upper left column, line 20 to lower left column, line 1 (Family: none) | 1-4 |
| Y | JP, A, 59-219182 (Yushin Kaihatsu Yugen Kaisha) 10 December, 1984 (10.12.84) & WO, A1, 8404722 | 1-4 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| July 1, 1988 (01.07.88) | July 18, 1988 (18.07.88) |
| International Searching Authority | Signature of Authorized Officer |
| Japanese Patent Office | |

Form PCT ISA/210 (second sheet) (January 1985)